# EUROPEAN PATENT SPECIFICATION

(11) **EP 2 488 375 B1**
(45) Date of publication and mention of the grant of the patent: **25.09.2013**
(21) Application number: 10754773.9
(22) Date of filing: 17.08.2010
(51) Int. Cl.: B60C 25/14

(54) **SAFETY INFLATION CAGE FOR TYRES**
SICHERHEITSKÄFIG FÜR REIFENFÜLLEINRICHTUNG
CAGE DE SECURITE DE GONFLAGE DE PNEUMATIQUES

(30) Priority: 18.08.2009 GB 0914395
(43) Date of publication of application: 22.08.2012
(73) Proprietor: Ram-Rod Manufacturing Limited, Staffordshire (GB)
(72) Inventor: HARGREAVES, Gary, Kenneth, Staffordshire (GB)
(74) Representative: Swindell & Pearson Limited
(86) International application number: PCT/GB2010/001551
(87) International publication number: WO 2011/020994

(56) References cited:
- EP-A2- 0 985 559
- JP-A- 11 152 016
- US-A- 4 529 019
- US-A1- 2005 082 013

## Description

This invention concerns containment apparatus, and particularly but not exclusively containment apparatus for locating a tyre whilst the tyre is being inflated.

Such apparatus are e.g. Known from US4529019 or EP 0985559 A2

When inflating vehicle tyres and especially for the first time, and particularly with tyres such as a lorry tyre which may have been retreated, there is a potential for the tyre failing, or a failure occurring with the mounting of the tyre on a wheel. Such a failure can be catastrophic and can be dangerous to persons in the vicinity. For instance a tyre may come off a wheel, and the tyre may be projected in one direction with the wheel moving in an opposite direction.

Also, during a tyre failure, and particularly with tyres such as lorry tyres which are inflated to relatively high pressures, a significant amount of high pressure air can be immediately released, which can sometimes move or even lift a person off the ground, potentially leading to injury, and even in some instances a fatality.

According to the present invention there is provided a containment apparatus for a tyre whilst the tyre is being inflated, the apparatus including walls defining an open topped enclosure, which walls are constructed so as to substantially provide no line of sight therethrough, and to provide a convoluted pathway for air passing therethrough.

The enclosure may include a number of walls, which may define a substantially rectangular enclosure in plan view. A one of the walls may be selectively openable to permit a tyre to be moved into or out of the enclosure.

A safety sensor may be provided to detect when the openable wall is fully closed, and the safety sensor may be operatively connectable so as to prevent a tyre in the enclosure from being inflated until the openable wall is fully closed.

A latch may be provided for retaining the openable wall fully closed, and a further safety sensor may be provided to detect when the latch is engaged to retain the openable wall fully closed, and the further safety sensor may be operatively connectable so as to prevent a tyre in the enclosure from being inflated if the latch is not engaged.

A window may be provided in a one of the walls, and may be provided in the openable wall. The window may be made of polycarbonate.

The walls may be made of steel.

At least some of the walls may be made of overlapping lengths of channel section, and each wall may be made of lengths of channel section extending vertically in use, with adjacent lengths of channel section arranged facing in opposite directions with the channels of adjacent lengths of channel section facing each other and overlapping, so as to define a convoluted pathway therebetween.

Adjacent channel sections may be mounted together at spaced locations, and adjacent channel sections may be mounted together at lower and upper ends.

The apparatus may also include a floor to the enclosure, and a formation may be provided on the floor to retain a tyre within the enclosure. One or more formations may be provided on the floor to enable the apparatus to be mounted to the ground or elsewhere.

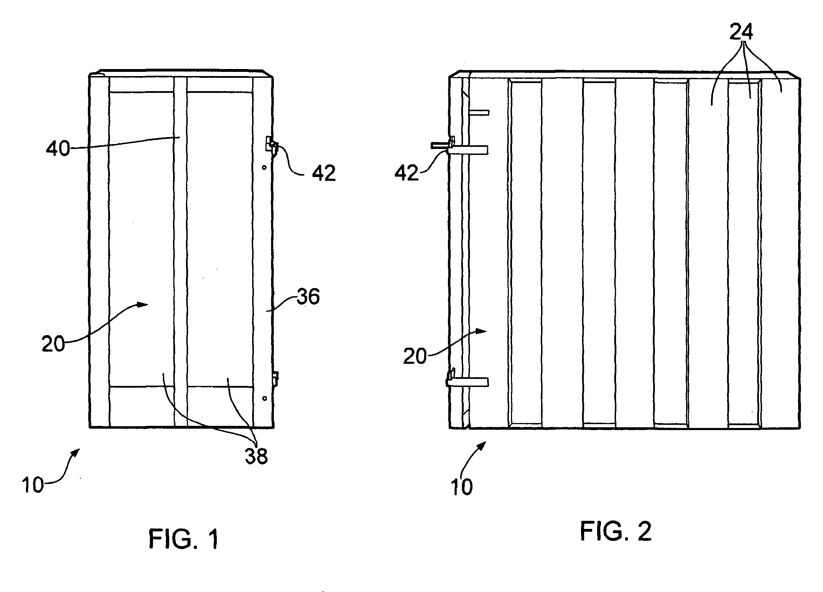

An embodiment of the present invention will now be described by way of example only and with reference to the accompanying drawings, in which:-
Fig. 1 is a front view of containment apparatus according to the invention;
Fig. 2 is a side view of the apparatus of Fig.1;
Fig. 3 is a sectional plan view of the apparatus of Fig. 1;
Fig. 4 is a perspective view from the front, one side and above of the apparatus of Fig. 1; and
Fig. 5 is a perspective sectional view from the front, a side and above of the apparatus of Fig. 1.

The drawings show a containment apparatus 10 suitable for locating a vehicle tyre such as a lorry tyre when being inflated. Such inflation may occur for instance after retreading of the tyre, when potentially the origins or history of the tyre may be unknown, and there is a potential for a number of different types of failure, which failure may be catastrophic.

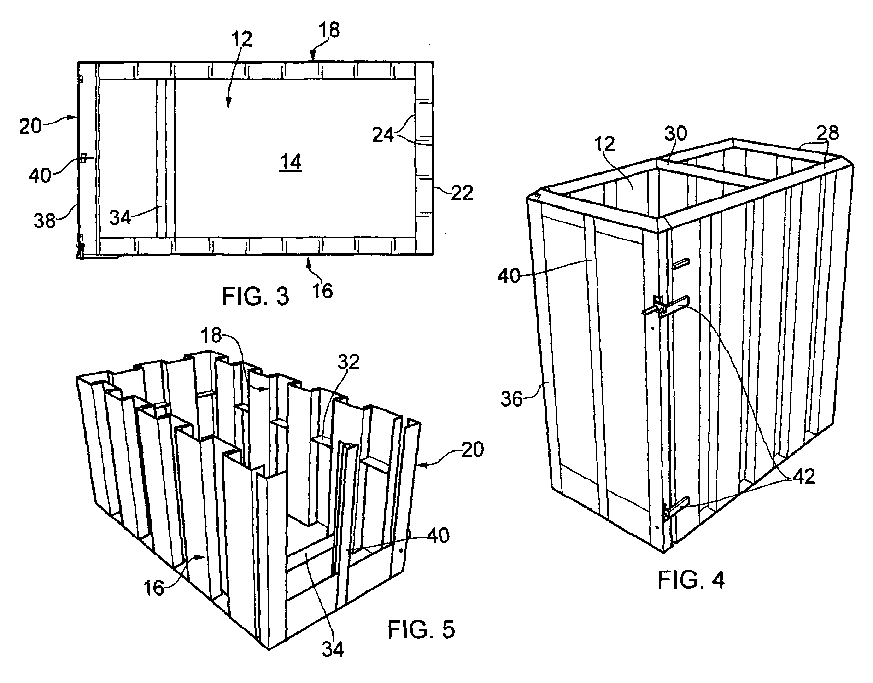

The apparatus 10 comprises an enclosure 12 defined by a floor 14, two side walls 16 and 18, and front and rear walls 20, 22. The side walls,16, 18 and rear wall 22 are formed from a structure of upstanding lengths of channel section 24 which alternatively face in opposite directions with the channels facing each other, and with the side limbs of the channel sections 24 just overlapping each other, thereby providing a convoluted passageway 26 therethrough as best seen in Fig. 3.

The channel sections 24 are mounted to the floor 14, and are mounted together at their top ends by inverted strips 28 of angle iron which are set at 45° to the horizontal. A strengthening strip 30 of angle ion also extends between the side walls 16, 18 substantially midway therealong. Two sets of lengths 32 of angle ion are provided at spaced locations on the interior channels only of the channel section 24 of the enclosure 12, to provide strengthening.

A formation in the form of a length 34 of angle iron facing downwardly and at a 45° inclination, is provided across the floor 14 towards the front wall 20, to retain a tyre within the enclosure 12.

The front 20 of the enclosure 12 is in the form of an openable door with a steel frame 36 defining an opening across which is mounted a sheet 38 of polycarbonate. A central support bar 40 extends vertically across the opening in the door. Two locking catches 42 are provided on the door.

In use a vehicle tyre can be located in the enclosure 12 to be inflated with an air line. An opening (not shown) may be provided in a one of the walls 16, 18 or 22 for an air line to pass through, and be provided with a gland or other seal to prevent any line of sight into the interior of the enclosure 12. The front wall door 20 will be closed, and if required a sensor or switch may be provided to detect that the front wall 20 is fully closed. Such a sensor or switch can be operatively connected to an inflation arrangement, such that full inflation can only take place when it is detected that the front wall 20 is fully closed.

A further sensor or switch may be provided on a one of the locking catches 42 to detect when the catch 42 is fully engaged. Such a sensor or switch can be operatively connected to an inflation arrangement, such that full inflation can only take place when it is detected that the catch 42 is fully engaged.

In the event of a failure of the tyre, gas and pressure can be dissipated upwardly, and also through the convoluted passageways 26, thereby significantly dissipating the pressure and any sound. The apparatus therefore prevents any high pressure air being released laterally from a failing tyre. Furthermore, the apparatus prevents any part of the tyre, wheel or otherwise being ejected therefrom other than vertically.

There is thus described an apparatus which significantly improves safety when tyres are being inflated, and particularly for a first time. The apparatus is however of relatively straightforward construction and can thus be robustly and readily manufactured. The apparatus also dissipates air, gas and sound when a tyre failure occurs.

Various modifications may be made without departing from the scope of the invention. For instance, the door may have a similar structure formed from channel sections as described for the side walls. A window may be provided in one of the side walls or the rear wall. The construction of the walls may take a different form. A single locking catch may be provided on the door. Formations may be provided in the floor to allow the apparatus to be mounted to the floor, or for instance to a vehicle for use in mobile situations.

Whilst endeavouring in the foregoing specification to draw attention to those features of the invention believed to be of particular importance it should be understood that the Applicant claims protection in respect of any patentable feature or combination of features hereinbefore referred to the appended claims.

## Claims

1. A containment apparatus for a tyre whilst the tyre is being inflated, the apparatus (10) including walls (16,18,20,22) defining an open topped enclosure (12), **characterised in that** the walls (16,18,20,22) are constructed so as to substantially provide no line of sight therethrough, and to provide a convoluted pathway for air passing therethrough.

2. Apparatus according to claim 1, **characterised in that** the enclosure (12) includes a number of walls (16,18,20,22) which define a substantially rectangular enclosure (12) in plan view.

3. Apparatus according to claims 1 or 2, **characterised in that** a one of the walls (20) is selectively openable to permit a tyre to be moved into or out of the enclosure (12).

4. Apparatus according to claim 3, **characterised in that** a safety sensor is provided to detect when the openable wall is fully closed.

5. Apparatus according to claim 4, **characterised in that** the safety sensor is operatively connectable so as to prevent a tyre in the enclosure (12) from being inflated until the openable wall (20) is fully closed.

6. Apparatus according to any of claims 3 to 5, **characterised in that** a latch (42) is provided for retaining the openable wall (20) fully closed.

7. Apparatus according to any of claim 6, **characterised in that** a further safety sensor is provided to detect when the latch (42) is engaged to retain the openable wall (20) fully closed.

8. Apparatus according to claim 7, **characterised in that** the further safety sensor is operatively connectable so as to prevent a tyre in the enclosure (12) from being inflated if the latch (42) is not engaged.

9. Apparatus according to any of the preceding claims, **characterised in that** a window (38) is provided in a one of the walls, and may be, provided in the openable wall and may be made of polycarbonate.

10. Apparatus according to any of the preceding claims, **characterised in that** the walls (16,18,20,22) are made of steel.

11. Apparatus according to any of the preceding claims, **characterised in that** at least some of the walls (16,18,22) are made of overlapping lengths of channel section (24), and that adjacent channel sections (24) may be mounted together at spaced locations.

12. Apparatus according to claim 11, **characterised in that** each wall (16,18,22) is made of lengths of channel section (24) extending vertically in use, with adjacent lengths of channel section (24) arranged facing in opposite directions with the channels of adjacent lengths of channel section (24) facing each other and overlapping, so as to define a convoluted pathway therebetween, and that adjacent channel sections (24) may be mounted at lower and upper ends.

13. Apparatus according to any of the preceding claims, **characterised in that** the apparatus also includes a floor (14) to the enclosure.

14. Apparatus according to claim 13, **characterised in that** a formation is provided on the floor (14) to retain a tyre within the enclosure.

15. Apparatus according to claims 13 or 14, **characterised in that** one or more formations are provided on the floor (14) to enable the apparatus to be mounted to the ground or elsewhere.

## Patentansprüche

1. Umschliessungsvorrichtung für einen Reifen, während der Reifen aufgeblasen wird, wobei die Vorrichtung (10) Wände (16, 18, 20, 22) enthält, welche eine oben offene Kammer (12) definieren, **dadurch gekennzeichnet, dass** die Wände (16, 18, 20, 22) derart aufgebaut sind, dass sie im wesentlichen keine Sichtlinie durch sie hindurch bereitstellen und einen gewundenen Weg für durch sie hindurchtretende Luft bereitstellen.

2. Vorrichtung nach Anspruch 1, **dadurch gekennzeichnet, dass** die Kammer (12) eine Anzahl Wände (16, 18, 20, 22) enthält, welche eine in der Draufsicht im wesentlichen rechteckförmige Kammer (12) definieren.

3. Vorrichtung nach Anspruch 1 oder 2, **dadurch gekennzeichnet, dass** eine der Wände (20) selektiv öffenbar ist, um einem Reifen zu ermöglichen, dass er in die Kammer hinein oder aus der Kammer (12) heraus bewegt wird.

4. Vorrichtung nach Anspruch 3, **dadurch gekennzeichnet, dass** ein Sicherheitssensor vorgesehen ist, um zu erfassen, wann die öffenbare Wand vollständig geschlossen ist.

5. Vorrichtung nach Anspruch 4, **dadurch gekennzeichnet, dass** der Sicherheitssensor betriebsmässig anschliessbar ist, um das Aufblähen eines Reifens in der Kammer (12) zu verhindern, bis die öffenbare Wand (20) völlig geschlossen ist.

6. Vorrichtung nach einem der Ansprüche 3 bis 5, **dadurch gekennzeichnet, dass** eine Rastvorrichtung (42) vorgesehen ist, um die öffenbare Wand (20) völlig geschlossen zu halten.

7. Vorrichtung nach jedem von Anspruch 6, **dadurch gekennzeichnet, dass** ein weiterer Sicherheitssensor vorgesehen ist, um zu erfassen, wann die Rastvorrichtung (42) eingerastet ist, um die öffenbare Wand (20) völlig geschlossen zu halten.

8. Vorrichtung nach Anspruch 7, **dadurch gekennzeichnet, dass** der weitere Sicherheitssensor betriebsmässig anschliessbar ist, um das Aufblähen eines Reifens in der Kammer (12) zu verhindern, falls die Rastvorrichtung (42) nicht eingerastet ist.

9. Vorrichtung nach einem der vorhergehenden Ansprüche, **dadurch gekennzeichnet, dass** in einer der Wände ein Fenster (38) vorgesehen ist und in der öffenbaren Wand vorgesehen sein kann und aus Polycarbonat bestehen kann.

10. Vorrichtung nach einem der vorhergehenden Ansprüche, **dadurch gekennzeichnet, dass** die Wände (16, 18, 20, 22) aus Stahl bestehen.

11. Vorrichtung nach einem der vorhergehenden Ansprüche, **dadurch gekennzeichnet, dass** mindestens einige der Wände (16, 18, 22) aus überlappenden Kanalabschnitten (24) bestimmter Länge bestehen, und dass aneinandergrenzende Kanalabschnitte (24) bei voneinander beabstandeten Orten aneinander montiert sein können.

12. Vorrichtung nach Anspruch 11, **dadurch gekennzeichnet, dass** jede Wand (16, 18, 22) aus Kanalabschnitten (24) bestimmter Länge besteht, die sich im Verwendungsfall vertikal erstrecken, wobei aneinandergrenzende Kanalabschnitte (24) bestimmter Länge in entgegengesetzte Richtungen weisend angeordnet sind, wobei die Kanäle aneinandergrenzender Kanalabschnitte (24) bestimmter Länge zueinander weisen und überlappen, um einen gewundenen Weg dazwischen zu definieren, und dass aneinandergrenzende Kanalabschnitte (24) an unteren und oberen Enden montiert sein können.

13. Vorrichtung nach einem der vorhergehenden Ansprüche, **dadurch gekennzeichnet, dass** die Vorrichtung auch einen Boden (14) der Kammer enthält.

14. Vorrichtung nach Anspruch 13, **dadurch gekennzeichnet, dass** an dem Boden (14) eine Formation vorgesehen ist, um einen Reifen innerhalb der Kammer zu halten.

15. Vorrichtung nach Anspruch 13 oder 14, **dadurch gekennzeichnet, dass** an dem Boden (14) eine oder mehrere Formationen vorgesehen sind, um ein Montieren der Vorrichtung am Grund oder anderswo zu ermöglichen.

## Revendications

1. Dispositif de confinement pour un pneumatique, pendant que le pneumatique est en cours de gonflage, le dispositif (10) comprenant des parois (16, 18, 20, 22) définissant une enceinte ayant une partie supérieure ouverte (12), **caractérisé en ce que** les parois (16, 18, 20, 22) sont conçues de façon à ne fournir sensiblement aucune ligne de vision à travers elles, et pour fournir un chemin convoluté pour que l'air passe au travers de celles-ci.

2. Dispositif selon la revendication 1, **caractérisé en ce que** l'enceinte (12) comprend un certain nombre de parois (16, 18, 20, 22) qui définissent une enceinte sensiblement rectangulaire (12) en vue en plan.

3. Dispositif selon les revendications 1 ou 2, **caractérisé en ce qu'**une des parois (20) peut être ouverte de manière sélective afin de permettre à un pneumatique d'être déplacé dans ou hors de l'enceinte (12).

4. Dispositif selon la revendication 3, **caractérisé en ce qu'**un capteur de sécurité est prévu pour détecter le moment où la paroi pouvant être ouverte est complètement fermée.

5. Dispositif selon la revendication 4, **caractérisé en ce que** le capteur de sécurité peut être connecté de manière opérationnelle de façon à empêcher un pneumatique dans l'enceinte (12) d'être gonflé jusqu'à ce que la paroi pouvant être ouverte (20) soit complètement fermée.

6. Dispositif selon l'une quelconque des revendications 3 à 5, **caractérisé en ce qu'**un verrou (42) est prévu pour retenir la paroi pouvant être ouverte (20) complètement fermée.

7. Dispositif selon la revendication 6, **caractérisé en ce qu'**un capteur de sécurité supplémentaire est prévu pour détecter le moment où le verrou (42) est engagé pour retenir la paroi pouvant être ouverte (20) complètement fermée.

8. Dispositif selon la revendication 7, **caractérisé en ce que** le capteur de sécurité supplémentaire peut être relié de manière opérationnelle de façon à empêcher un pneumatique dans l'enceinte (12) d'être gonflé si le verrou (42) n'est pas engagé.

9. Dispositif selon l'une quelconque des revendications précédentes, **caractérisé en ce qu'**une fenêtre (38) est prévue dans une des parois, et peut être prévue dans la paroi pouvant être ouverte et peut être réalisée en polycarbonate.

10. Dispositif selon l'une quelconque des revendications précédentes, **caractérisé en ce que** les parois (16, 18, 20, 22) sont réalisées en acier.

11. Dispositif selon l'une quelconque des revendications précédentes, **caractérisé en ce qu'**au moins certaines des parois (16, 18, 20, 22) sont réalisées à partir de longueurs de section de canal (24) se chevauchant, et **en ce que** des sections de canal (24) adjacentes peuvent être montées ensemble en des emplacements espacés.

12. Dispositif selon la revendication 11, **caractérisé en ce que** chaque parois (16, 18, 20, 22) est réalisée à partir de longueurs de section de canal (24) s'étendant verticalement en cours d'utilisation, avec des longueurs de section de canal (24) adjacentes agencées en faisant face dans des directions opposées aux canaux de longueurs de section de canal (24) adjacentes se faisant face entre elles et se chevauchant, de manière à définir entre elles un chemin convoluté, et **en ce que** les sections de canaux (24) adjacentes peuvent être montées au niveau d'extrémités supérieures et inférieures.

13. Dispositif selon l'une quelconque des revendications précédentes, **caractérisé en ce que** le dispositif comprend également un plancher (14) pour fenceinte.

14. Dispositif selon la revendication 13, **caractérisé en ce qu'**une formation est prévue sur le plancher (14) afin de retenir un pneumatique à l'intérieur de l'enceinte.

15. Dispositif selon les revendications 13 ou 14, **caractérisé en ce qu'**une ou plusieurs formations sont prévues sur le plancher (14) pour permettre au dispositif d'être monté sur le sol ou ailleurs.
